# FASCICULE DE BREVET EUROPEEN

(11) **EP 1 307 760 B1**
(45) Date de publication et mention de la délivrance du brevet: **10.12.2008**
(21) Numéro de dépôt: 01953283.7
(22) Date de dépôt: 30.07.2001
(51) Int. Cl.: G01S 3/80, G01S 5/20, G01S 15/06, H04B 11/00

(54) **DISPOSITIF ACOUSTIQUE DE NAVIGATION POUR LA PLONGEE SOUS-MARINE**
AKUSTISCHES NAVIGATIONSGERÄT FÜR TAUCHER
NAVIGATING ACOUSTIC DEVICE FOR SKIN DIVING

(30) Priorité: 31.07.2000 EP 00810692
(43) Date de publication de la demande: 07.05.2003
(73) Titulaire: Brizard, Thierry, 06780 Aspremont (FR)
(72) Inventeur: Brizard, Thierry, 06780 Aspremont (FR)
(74) Mandataire: Savoye, Jean-Paul
(86) Numéro de dépôt international: PCT/IB2001/001361
(87) Numéro de publication internationale: WO 2002/010793

(56) Documents cités:
- EP-A- 0 508 819
- WO-A-99/29058
- FR-A- 2 724 363
- US-A- 5 303 206
- US-A- 5 570 323
- US-A- 5 659 520
- US-A- 5 784 339

## Description

La présente invention se rapporte à un dispositif acoustique de navigation permettant à un plongeur sous-marin, plongeant seul ou en groupe, de connaître en permanence sa position (direction et distance) par rapport au bateau de soutien d'où la plongée s'effectue. Ce dispositif est construit autour d'un processeur de traitement de signal numérique lui conférant toute la puissance de calcul nécessaire pour adapter son traitement aux conditions très particulières de la propagation des ondes acoustiques en milieu sous-marin. Ce dispositif n'agit pas à la demande mais de manière automatique et permanente sans intervention du plongeur. Le dispositif permet aussi de recevoir des messages envoyés du bateau, notamment des messages d'alerte et peut aussi intégrer une fonction "ordinateur de plongée". Plusieurs dispositifs peuvent être déployés sur le même site par plusieurs groupes de plongeurs sans se contrarier.

La plongée sous-marine est une activité qui compte de plus en plus d'adeptes mais qui reste cependant cataloguée comme étant un sport à risques. Aujourd'hui plus que jamais l'amélioration de la sécurité du plongeur représente un souci majeur. Une grande partie des accidents surviennent lorsque le plongeur se perd et devient incapable de regagner le bateau de soutien. L'effet de panique consécutif à la prise de conscience de la désorientation a souvent des conséquences tragiques. Il est donc important de pouvoir disposer d'un système autonome qui permette au plongeur de connaître automatiquement et de façon fiable sa position vis-à-vis du bateau de soutien par simple affichage. Le même souci de sécurité conduit à rechercher la capacité de transmettre instantanément au plongeur un message d'alerte lui demandant, par exemple, de remonter immédiatement à la surface dans le cas d'une situation d'urgence.

Quelques systèmes de navigation sont aujourd'hui commercialisés. Tous comprennent une source acoustique immergée sous le bateau associée à un récepteur directif de type torche tenu en main par le plongeur. Ce dernier doit balayer l'espace avec ce récepteur torche pour intercepter le signal issu de la source acoustique, trouvant ainsi sa direction de retour.

Ces systèmes ne répondent qu'imparfaitement au double besoin de navigation et de messagerie d'urgence: aucun ne permet de calculer la direction de manière complètement automatique: le balayage de l'espace pour trouver la direction requiert toute la concentration du plongeur et a toutes les chances d'augmenter son stress de manière significative si le signal n'est pas intercepté rapidement.

Aucun des récepteurs ne possède une chaîne de traitement des signaux acoustiques vraiment adaptée à la complexité de la propagation acoustique en milieu sous-marin (échos multiples, réverbération, masquages, atténuation, etc.), ce qui est nécessaire pour leur conférer des performances acceptables à la mer.

Par ailleurs, la plupart des dispositifs commercialisés ne permettent pas le déploiement simultané de plusieurs systèmes sur le même site. Cette fonction est toutefois proposée par quelques appareils haut de gamme, mais fortement limitée par un trop petit nombre de canaux devant être souvent sélectionnés manuellement.

Enfin, le prix des appareils les plus perfectionnés est élevé, ce qui limite leur diffusion.

Comme pour les systèmes commercialisés, le dispositif décrit par Bemp et al (US 5 303 206) comprend une source acoustique immergée sous le bateau associée à un récepteur directif tenu en main par le plongeur.

Le récepteur est construit autour d'une électronique simpliste, à puissance de calcul rudimentaire, limitant sévèrement les performances à la mer d'un appareil construit selon ce principe :
○ Direction : la chaîne de traitement à base d'électronique discrète ne permet de présenter au plongeur qu'une indication grossière « gauche », « droite » et « arrière » par l'intermédiaire de trois indicateurs lumineux de type diodes électroluminescentes.
○ Distance : le principe utilisé pour la détermination de la distance par synchronisation des horloges de la source acoustique et du récepteur dérive du brevet de Peynaud et al (FR 2 519 769, US 4 516 226). Pour ce qui concerne la réalisation de ladite chaîne, Bemp a utilisé une logique câblée n'offrant aucune sécurité si le récepteur se trouve momentanément dans l'incapacité de détecter les impulsions de la source, cas très fréquent en milieu sous-marin causé par un masquage desdites impulsions par le corps du plongeur ou par un obstacle. Dans ce cas, l'indication de distance présentée au plongeur sera forcément erronée. De plus, le cadencement des impulsions à 4,6875 Hertz limite la portée de l'appareil à 320 mètres.

Malgré la simplicité de son électronique, un dispositif construit sur la base des schémas de Bemp ne sera pas pour autant très économique à cause de l'utilisation d'oscillateurs ultra stables de coût élevé aussi bien dans la source acoustique et que dans le récepteur. De plus, le choix de la fréquence acoustique à 29,5 kHz ne permet pas l'utilisation de composants électroniques grand public très bas coûts utilisés par exemple dans les chaînes Hi-Fi.

Le système de Prichard et al (US 5 570 323) comprend un transpondeur acoustique (récepteur/émetteur) immergé sous le bateau associé à un récepteur/interrogateur tenu en main par le plongeur.

Sur interrogation déclenchée par le plongeur, le transpondeur répond par l'émission d'un deuxième signal.

Le récepteur calcule la distance au transpondeur par chronométrage de l'intervalle de temps entre l'interrogation et le retour de l'onde auquel il convient de soustraire la latence (connue) du transpondeur.

Le récepteur détermine alors la direction en comparant les énergies reçues par deux capteurs acoustiques latéraux (positionnés à 90°ou dans le même plan). Le calcul de la direction est fortement perturbé par les échos multiples, réfléchis par le fond, la surface ou les obstacles proches qui additionnent leur énergie à celle de l'impulsion directe et faussent ainsi complètement la mesure.

De plus, le dispositif préconisé par Prichard inclut une source acoustique et un récepteur pour chaque élément (transpondeur et récepteur/interrogateur) ce qui double pratiquement le coût de réalisation par rapport à une solution où le récepteur serait purement passif.

Les documents US-A-5 659 520, WO-A-99 29058, US-A-5 784 339, EP-A2-0 508 819 et FR-A-2 724 363 aussi décrivent des dispositifs acoustiques de navigation et des dispositifs de communication sous-marins.

### Description de l'invention

Le but de la présente invention est de remédier, au moins en partie, aux inconvénients sus mentionnés: performances à la mer insuffisantes pour assurer une sécurité convenable, obligation faite au plongeur de rechercher sa direction manuellement par "balayage", limitation du nombre de systèmes pouvant être déployés sur un même site, sélection manuelle des canaux de fonctionnement et prix élevé.

A cet effet, cette invention a pour objet un dispositif acoustique de navigation pour la plongée selon la revendication 1.

Le dispositif selon l'invention met en oeuvre une source acoustique associée à plusieurs ensembles de réception et de signalisation aux caractéristiques radicalement différentes des produits actuellement commercialisés.

La conception du dispositif permet de réduire suffisamment les dimensions de l'ensemble de réception et de signalisation pour qu'il puisse être porté au poignet du plongeur selon le principe de la montre-bracelet.

D'autres particularités et avantages de l'invention apparaîtront clairement dans la description suivante, faite à titre d'exemple non limitatif en regard des figures annexées qui représentent :
la figure 1, une illustration schématique de l'environnement sous-marin mettant en oeuvre un dispositif selon l'invention, avec une source acoustique et plusieurs ensembles de réception et de signalisation,
la figure 2, une vue synoptique d'une source acoustique selon l'invention,
la figure 3, une représentation temporelle du signal émis par la source acoustique et le principe de sa propagation omnidirectionnelle dans le milieu sous-marin,
la figure 4, une illustration schématique de l'environnement sous-marin mettant en oeuvre un dispositif selon l'invention, avec plusieurs sources et plusieurs ensembles de réception et de signalisation,
la figure 5, une vue synoptique d'un ensemble de réception et de signalisation selon l'invention,
la figure 6, une illustration du mécanisme de calcul de direction angulaire à partir de la mesure des phases des signaux reçus sur chacun des capteurs acoustiques, et
la figure 7, une illustration des moyens de signalisation 8.

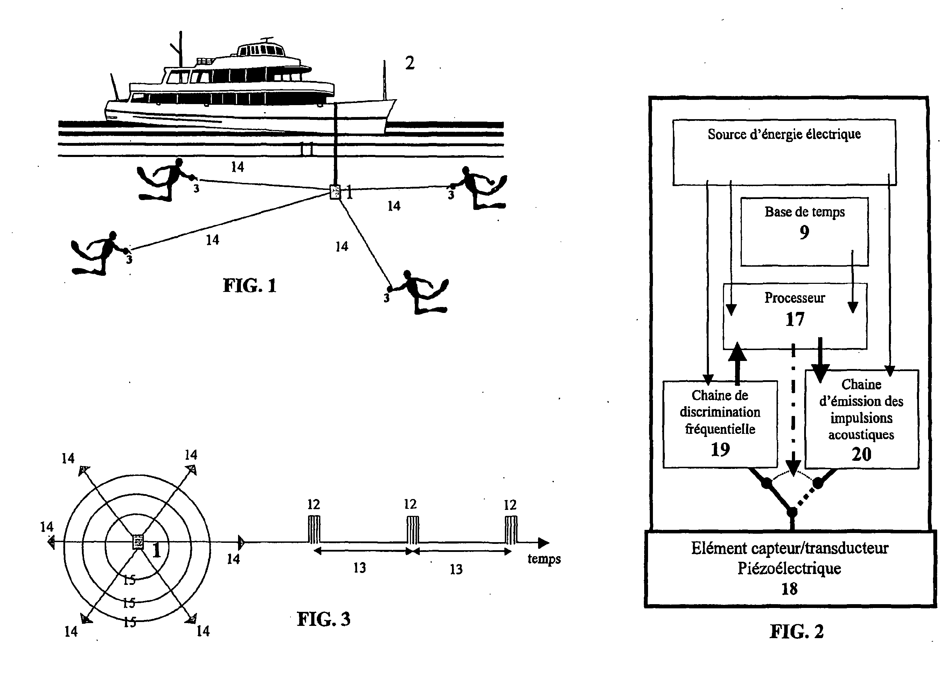

Comme représenté sur la figure 1, le dispositif se compose de deux parties principales: la source acoustique 1 immergée à partir du bateau de soutien 2 et reliée à celui-ci par un câble 11, et l'ensemble de réception et de signalisation 3 porté par chaque plongeur. Etant donné la nature passive des traitements de l'ensemble de réception et de signalisation 3, une même source acoustique 1 peut servir à un nombre illimité de plongeurs, chacun équipé d'un ensemble de réception et de signalisation 3.

Comme représenté sur la figure 2, la source acoustique 1 comprend un élément capteur/transducteur piézoélectrique 18 pouvant soit écouter le milieu sous-marin (fonction capteur), soit produire des impulsions acoustiques 12 (fonction transducteur).

Dans sa fonction capteur, l'élément piézoélectrique 18 reçoit des signaux acoustiques du milieu sous-marin que ledit élément transmet sous forme électrique à la chaîne de discrimination fréquentielle 19. Cette chaîne 19 peut être réalisée, par exemple, au moyen d'une batterie de filtres passe-bande en parallèle dont chacun communique au processeur 17 le niveau d'énergie acoustique filtré dans sa bande propre. L'ensemble de ces informations permet audit processeur d'avoir la connaissance des canaux de fréquences libres ou occupés dans l'environnement proche de la source acoustique 1.

Dans sa fonction transducteur, l'élément piézoélectrique 18 transforme en énergie acoustique les stimulis électriques reçus de la chaîne d'émission des impulsions acoustiques 20 sous le contrôle du processeur 17 et de la base de temps 9 dont la fréquence exacte d'oscillation a été préalablement mesurée avec une précision minimum de 10⁻⁶ à la température moyenne de fonctionnement, en la comparant, par exemple, au signal de référence Pulse Per Second (PPS) délivré par un récepteur GPS (Global Positioning System).

Comme représenté sur la figure 3, la source acoustique 1 émet des impulsions à fréquence pure 12, pouvant être pondérées en amplitude par une enveloppe temporelle non rectangulaire, selon une cadence 13 précise, supérieure ou égale à une seconde pour autoriser des portées au-delà de 1,5 km, dans toutes les directions 14 de l'espace à la fois, générant des fronts de propagation sphériques 15. La cadence d'émission 13 est obtenue par comptage des oscillations de la base de temps 9. Si par exemple, ladite base de temps 9 fonctionne à 20 MegaHertz, une impulsion acoustique 12 sera émise chaque fois que le processeur 17 aura compté le nombre d'oscillations adéquat pour garantir la précision de la cadence 13 à une seconde, selon l'exemple. Le nombre d'oscillations adéquat s'obtient en compensant les 20'000'000 oscillations théoriques d'une valeur calculée à partir de la « vraie » fréquence d'oscillation mesurée de la base de temps 9. Sur intervention d'un opérateur, la source acoustique 1 peut également émettre un signal spécifique d'alerte, qui sera interprété comme tel par l'ensemble de réception et de signalisation 3.

Dès sa mise à l'eau, la fréquence des impulsions émises par la source acoustique 1 est sélectionnée automatiquement sur un canal libre parmi plusieurs canaux, par exemple, huit canaux répartis de 18,5 à 22 kHz avec un intervalle inter canaux de 500 Hz . A cet effet, le processeur 17 active la chaîne de discrimination fréquentielle 19 au moment de l'initialisation de la source acoustique 1. Le processeur 17 est alors à même de déterminer si une autre source acoustique est active dans son voisinage immédiat. Si tel est le cas, le processeur 17 s'interdit de générer des impulsions 12 sur le canal de fréquence correspondant et choisit un autre canal "libre" pour émettre lesdites impulsions.

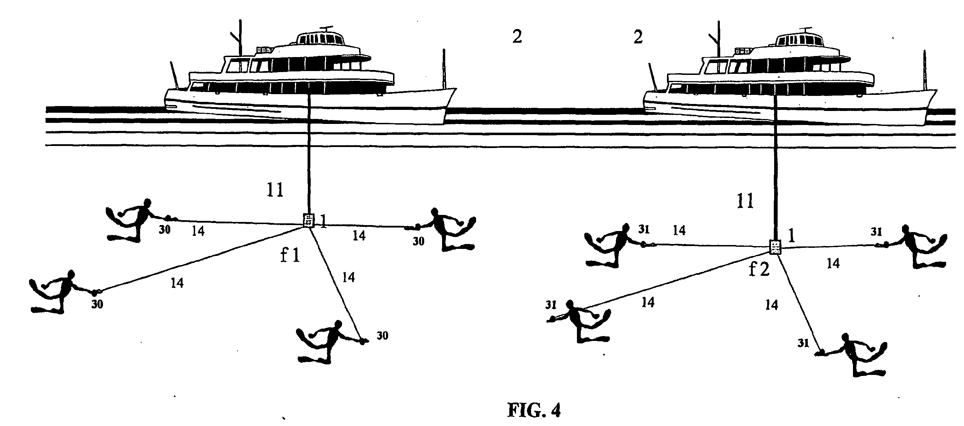

L'existence de plusieurs fréquences d'émission possibles permet de faire cohabiter sur un même site et sans risque d'interférence plusieurs groupes de plongeurs. Comme indiqué sur la figure 4, le premier groupe de plongeurs se repère par rapport à la source émettant sur la fréquence f1, leurs ensembles de réception et de signalisation 30 se calant automatiquement sur la fréquence f1 alors que le deuxième groupe de plongeurs se repère par rapport à la source f2, leurs ensembles de réception et de signalisation 31 se calant automatiquement sur la fréquence f2.

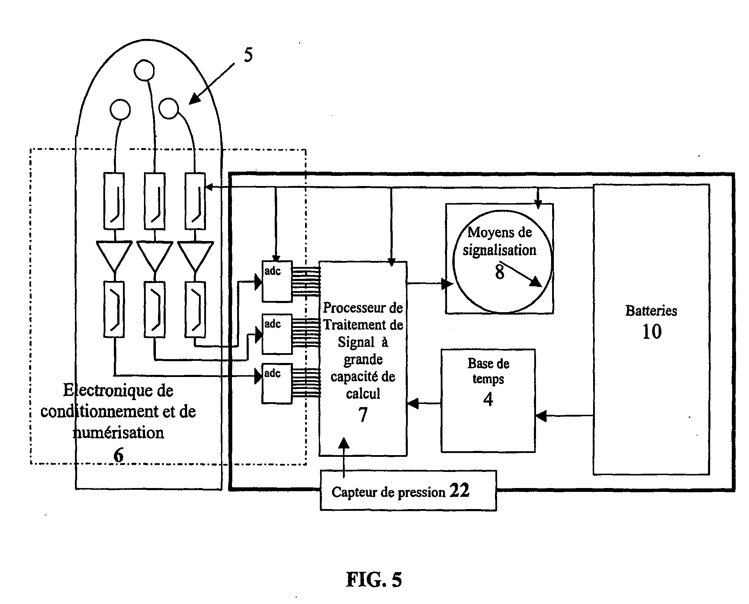

Comme indiqué sur la figure 5, l'ensemble de réception et de signalisation 3 est composé d'un ensemble d'au moins trois capteurs acoustiques non alignés 5, d'une base de temps 4 identique à la base de temps 9 de la source acoustique et dont la fréquence exacte d'oscillation a aussi été préalablement mesurée avec une précision minimum de 10⁻⁶ à la température moyenne de fonctionnement, d'une électronique de conditionnement (filtrage et amplification analogique) et de numérisation 6 associée à chaque capteur, d'un processeur numérique de traitement de signal 7 à grande capacité de calcul (puissance supérieure à 40 Méga opérations par seconde) permettant de traiter les signaux des capteurs avec des algorithmes adaptés aux conditions de propagation sous-marine et s'affranchissant des problèmes d'échos multiples et de réverbération, des moyens de signalisation 8 et optionnellement d'un capteur de pression 22. L'ensemble de réception est alimenté par un jeu de batteries 10.

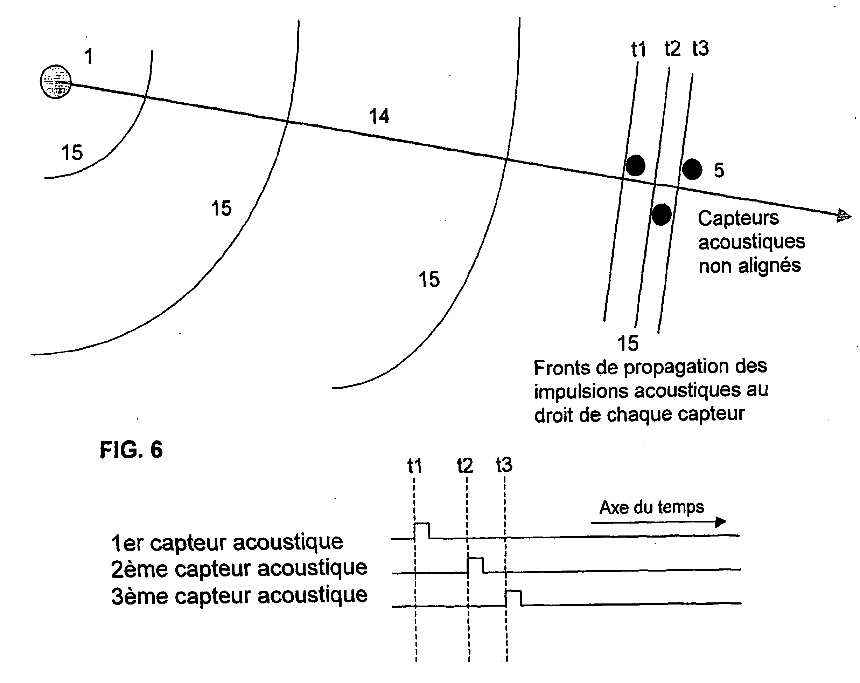

Comme indiqué sur la figure 6, les capteurs acoustiques non alignés 5 reçoivent les impulsions acoustiques 12 en provenance de la source acoustique 1 à des instants t1, t2 et t3 différents. L'électronique de conditionnement réalise plusieurs opérations permettant d'adapter les signaux issus de l'antenne à la suite du traitement: filtrage de bande permettant d'isoler la plage utile de fréquence, par exemple 18,5-22 kHz, amplification pour cadrer le niveau des signaux, par exemple de gain 300 et numérisation (conversion analogique numérique) réalisée, par un convertisseur delta-sigma sur 18 bits séquencé à 48 kHz, délivrant un échantillon toutes les 20,8 microsecondes, selon l'exemple.

Après numérisation, les signaux acoustiques sont envoyés au processeur 7 de traitement de signal pour la suite du traitement : démodulation complexe, filtrage passe bas, calcul de l'énergie, détection, détermination de la direction et de la distance puis affichage.

Le processeur 7 peut être choisi parmi la gamme des Digital Signal Processors de Texas Instrument à virgule fixe, de faible consommation avec une puissance de calcul excédent 40 Méga-opérations par seconde et doté d'un jeu d'instructions bien adapté aux algorithmes de systèmes embarqués temps réel.

La démodulation complexe a pour but de ramener chacun des trois signaux numérisés en bande de base en respectant leur amplitude et leur phase. Elle s'effectue en multipliant chaque signal par Cos(2πF₀.t + φ) pour la composante en phase, et par Sin(2πF₀.t + φ) pour la composante en quadrature de phase. La fréquence de la démodulation complexe F₀ correspond à la fréquence d'émission de la source acoustique.

Le filtrage passe bas doit s'effectuer avec une sélectivité suffisante pour isoler sans perte notable le canal d'émission et atténuer les canaux adjacents au niveau du bruit ambiant dans la bande passante du filtre. On peut choisir un filtre apportant un affaiblissement de l'ordre de -70 dB à 500 Hz de type non récursif. Le filtrage des trois voies acoustiques pourra se faire en exécutant le filtre passe bas six fois pendant une période de 20,8 µs.

Après avoir calculé l'énergie de chaque signal, le processeur 7 entretient pour chacune des voies deux intégrateurs, l'un à constante de temps courte, l'autre à constante de temps longue. Lorsque la différence entre les deux intégrateurs dépasse un seuil pré-établi, le processeur 7 décrète qu'il y a détection.

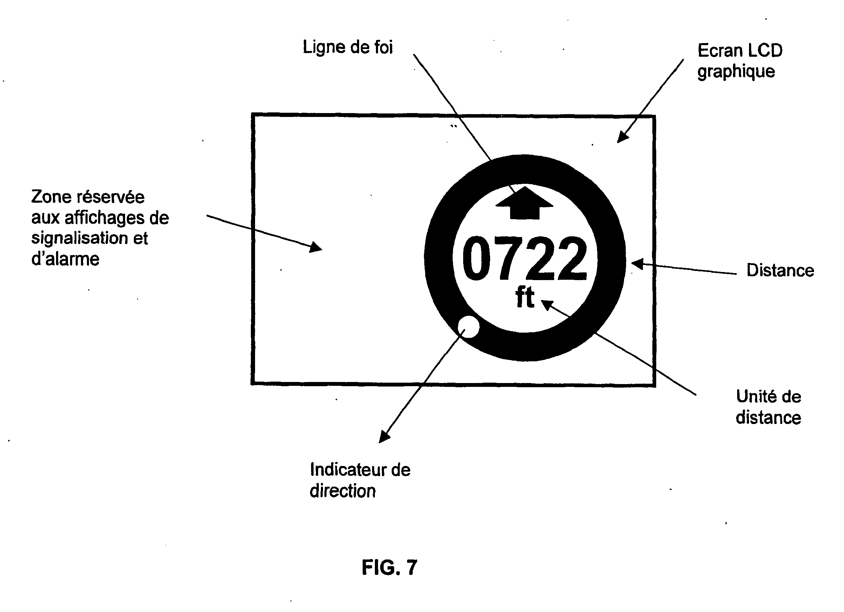

Le processeur 7 mesure alors les phases des trois signaux issus du filtrage passe bas correspondant aux différences de marche entre les capteurs puis déroule son algorithme de goniométrie pour déterminer au degré près la position angulaire desdits capteurs par rapport à la direction de propagation 14, indicatrice de la direction du bateau de soutien 2. Cette direction est alors affichée avec la même précision par l'intermédiaire des moyens de signalisation 8, pouvant être un écran à cristaux liquides (LCD) graphique de résolution 100 colonnes x 64 lignes, comme représenté en figure 7.

Au début de la plongée, le plongeur active son ensemble de réception et de signalisation 3 au voisinage immédiat de la source acoustique 1 immergée. Les étapes de l'initialisation de l'ensemble de réception et de signalisation 3 sont les suivantes :
• Détection automatique de la fréquence d'émission de ladite source et paramétrage du logiciel du processeur 7 en conséquence,
• Génération et entretien d'une réplique synchrone de la cadence 13 des émissions de la source acoustique 1 pour le calcul de la distance. Pour éviter que cette réplique ne se désynchronise de la cadence 13 pendant le temps de la plongée, le processeur 7 compense son algorithme de génération de ladite réplique en prenant en compte la fréquence exacte d'oscillation de la base de temps 4 telle que préalablement mesurée (précision minimum de 10⁻⁶) à la température moyenne de fonctionnement.

La mesure de distance entre le plongeur et son bateau 2 est directement obtenue par la mesure de l'écart de temps entre la réplique synchrone représentative de l'instant d'émission T0 d'une impulsion acoustique 12 par la source 1 et l'instant de réception T de ladite impulsion par l'ensemble de réception et de signalisation 3.

Cet écart (T-T0) est alors multiplié par la vitesse de propagation du son dans l'eau (environ 1500 m/s) pour donner la distance qui est affichée à chaque réception d'une impulsion acoustique 12.

Un message d'urgence envoyé par la source acoustique 1, par exemple, comme une modification de la récurrence 13 des impulsions 12 est susceptible d'être reconnu par le processeur 7 de l'ensemble de réception et de signalisation 3, ledit processeur générant alors, sur les moyens de signalisation 8, un symbole spécifique indiquant, par exemple, au plongeur l'ordre de remonter à la surface au plus vite. Cette indication visuelle peut être avantageusement doublée d'une alarme sonore (buzzer) ou d'un système de vibreur.

L'ensemble de réception et de signalisation 3 intègre accessoirement une fonction ordinateur de plongée où les indications du capteur de pression 22 sont enregistrées de façon non volatiles sur plusieurs plongées consécutives (par exemple 10). Lors des opérations de remontée du plongeur, l'ensemble de réception et de signalisation 3 peut afficher, sur sa demande, les indications nécessaires pour effectuer ses paliers de décompression.

Malgré des performances élevées, le coût de réalisation du dispositif est maintenu bas par l'utilisation de :
○ Bases de temps standard dans la source acoustique et l'ensemble de réception et de signalisation. La fréquence d'oscillation desdites bases de temps faisant l'objet d'une mesure préliminaire très précise afin que chaque processeur 7 ou 17 puisse prendre en compte la compensation nécessaire dans leurs traitements respectifs d'entretien des horloges synchrones,
○ Processeur de traitement de signal 7 bas coût utilisé dans des applications de masse grand public comme la téléphonie mobile,
○ Fréquence des signaux acoustiques choisie en dessous de 24 kHz, permettant l'utilisation dans la source acoustique et dans l'électronique de conditionnement de composants électroniques grand public très bas coûts, comme ceux utilisés dans les chaînes Hi-Fi.

## Revendications

1. Dispositif acoustique de navigation pour la plongée sous-marine, comprenant une source acoustique (1) immergée pour l'émission d'impulsions acoustiques (12) et un ou plusieurs ensembles de réception et de signalisation (3), pourvus d'une source d'énergie électrique, chaque ensemble de réception et de signalisation (3) comportant une base de temps (4), au moins trois capteurs acoustiques (5) non alignés, pour capter les impulsions de ladite source acoustique (1), une électronique de conditionnement et de numérisation (6) desdits signaux acoustiques, associée à chaque capteur acoustique (5), un processeur (7) comprenant des moyens de mesure de distance par synchronisation d'horloges et un goniomètre à mesure de phases donnant une information de direction précise par rapport à la source acoustique (1) à partir des impulsions acoustiques (12) captées par lesdits capteurs (5), et des moyens de signalisation (8), reliés audit processeur (7) pour fournir les indications calculées par ce processeur (7), **caractérisé en ce que** la gamme de fréquence de travail de ce dispositif est inférieure à 24 KHz, que ledit processeur (7) est un processeur digital de traitement de signal programmable ayant une puissance de calcul d'au moins 40 méga-opérations /sec et que l'algorithme de traitement desdites impulsions acoustiques comporte une démodulation complexe, un filtre passe bas, un détecteur centré sur la fréquence d'émission desdites impulsions, comportant deux intégrateurs à constantes d'intégration respectives longue et courte.

2. Dispositif selon la revendication 1, **caractérisé en ce** ledit processeur (7) comporte des moyens pour mesurer les écarts de temps d'arrivée ou de phase d'une même impulsion acoustique (12) provenant de ladite source acoustique (1) capitée par chacun des capteurs (5) et des moyens pour calculer la direction dudit ensemble de réception et de signalisation (3) par rapport à ladite source acoustique (1) à partir desdits écarts de temps mesurés.

3. Dispositif selon l'une des revendications précédentes, **caractérisé en ce que** ledit processeur (7) comporte des moyens pour calculer l'écart de temps entre l'instant d'émission d'une impulsion acoustique (12) par ladite source acoustique (1) et l'instant de sa détection par ledit récepteur (3) et des moyens pour calculer la distance entre ledit récepteur (3) et ladite source acoustique (1) par multiplication dudit écart de temps calculé par la vitesse de propagation du son dans l'eau.

4. Dispositif selon l'une des revendications précédentes, **caractérisé en ce que** le processeur (7) de l'ensemble de réception et de signalisation (3) comporte des moyens de discrimination pour lui permettre de reconnaître les impulsions émises par une source acoustique (1) déterminée.

5. Dispositif selon l'une des revendications précédentes, **caractérisé en ce que** ladite source acoustique (1) présente des moyens (17) pour sélectionner une fréquence d'émission.

6. Dispositif selon l'une des revendications précédentes, **caractérisé en ce que** ladite source acoustique (1) comporte des moyens pour envoyer un signal spécifique susceptible d'être reconnu comme tel par ledit processeur (7) de façon à ce que lesdits moyens de signalisation (8) fournissent une indication visuelle et/ou sonore caractéristique dudit signal spécifique.

7. Dispositif selon l'une des revendications précédentes, **caractérisé en ce que** l'ensemble de réception et de signalisation (3) comporte les fonctions d'un ordinateur de plongée.

## Claims

1. Acoustic navigation device for scuba diving, comprising an underwater acoustic source (1) for the emission of acoustic pulses (12) and one or more receiving and signalling assemblies (3), which are equipped with a source of electrical power, each receiving and signalling assembly (3) comprising a time-base (4), at least three non-aligned acoustic sensors (5), for sensing the pulses from the said acoustic source (1), conditioning and digitization electronics (6) for the said acoustic signals, associated with each acoustic sensor (5), a processor (7) comprising distance measurement means using clock synchronization and a goniometer with phase measurement yielding precise directional information with respect to the acoustic source (1) using the acoustic pulses (12) sensed by the said sensors (5), and signalling means (8), connected to the said processor (7) in order to provide the indications calculated by this processor (7), **characterized in that** the operating frequency range of this device is less than 24 kHz, **in that** the said processor (7) is a programmable digital signal processing processor with a processing power of at least 40 mega-operations /sec and **in that** the processing algorithm for the said acoustic pulses comprises a complex demodulation, a low-pass filter, a detector centred on the emission frequency of the said pulses, comprising two integrators with long and short integration time constants, respectively.

2. Device according to Claim 1, **characterized in that** the said processor (7) comprises means for measuring the differences in arrival time or in phase of the same acoustic pulse (12) originating from the said acoustic source (1) sensed by each of the sensors (5) and means for calculating the direction of the said receiving and signalling assembly (3) with respect to the said acoustic source (1) based on the said measured time differences.

3. Device according to one of the preceding claims, **characterized in that** the said processor (7) comprises means for calculating the time difference between the moment of emission of an acoustic pulse (12) by the said acoustic source (1) and the moment of its detection by the said receiver (3) and means for calculating the distance between the said receiver (3) and the said acoustic source (1) by multiplying the said calculated time difference by the speed of sound in water.

4. Device according to one of the preceding claims, **characterized in that** the processor (7) of the receiving and signalling assembly (3) comprises discrimination means to allow it to recognize the pulses emitted by a given acoustic source (1).

5. Device according to one of the preceding claims, **characterized in that** the said acoustic source (1) possesses means (17) for selecting an emission frequency.

6. Device according to one of the preceding claims, **characterized in that** the said acoustic source (1) comprises means for sending a specific signal able to be recognized as such by the said processor (7) in such a manner that the said signalling means (8) provide a visual and/or audio indication characteristic of the said specific signal.

7. Device according to one of the preceding claims, **characterized in that** the receiving and signalling assembly (3) comprises the functions of a diving computer.

## Patentansprüche

1. Akustisches Navigationsgerät für das Tauchen mit einer Unterwasser-Schallquelle (1) für die Aussendung akustischer Impulse (12) und einer oder mehreren mit einer Stromquelle ausgestatteten Anordnungen (3) für den Empfang und die Signalaussendung, wobei jede Anordnung (3) für den Empfang und die Signalaussendung eine Zeitbasis (4), zumindest drei nicht gefluchtete Schallaufnehmer (5) zum Abfangen der Impulse der Schallquelle (1), eine jedem Schallaufnehmer (5) beigeordnete Konditionier- und Digitalisierelektronik (6) für die Schallsignale, einen Prozessor (7), der Mittel zur Distanzmessung durch Taktsynchronisation sowie ein auf Phasenmessung beruhendes Goniometer umfasst, das aus den durch die Sensoren (5) abgefangenen akustischen Impulsen (12) genaue Richtungsdaten bezüglich der Schallquelle (1) liefert, sowie Mittel (8) für die Signalaussendung aufweist, die an den Prozessor (7) angeschlossen sind, um die durch diesen Prozessor (7) berechneten Angaben zu liefern, **dadurch gekennzeichnet, dass** der Arbeitsfrequenzbereich dieses Geräts unterhalb von 24 kHz liegt, dass der Prozessor (7) ein programmierbarer digitaler Signalverarbeitungsprozessor mit einer Rechenleistung von mindestens 40 Millionen Operationen pro Sekunde ist und dass der Algorithmus für die Verarbeitung der Schallimpulse eine komplexe Demodulation, ein Tiefpassfilter und einen auf die Sendefrequenz der Impulse zentrierten Detektor aufweist, der zwei Integratoren mit einer langen bzw. einer kurzen Integrationskonstante umfasst.

2. Gerät nach Anspruch 1, **dadurch gekennzeichnet, dass** der Prozessor (7) Mittel aufweist, um die Differenzen in der Ankunftszeit oder Phase eines gegebenen, von der Schallquelle (1) kommenden und von jedem der Sensoren (5) aufgefangenen Schallimpulses (12) zu messen, sowie Mittel, um aus den gemessenen Zeitdifferenzen die Richtung der Anordnung (3) für den Empfang und die Signalaussendung bezüglich der Schallquelle (1) zu berechnen.

3. Gerät nach einem der vorangehenden Ansprüche, **dadurch gekennzeichnet, dass** der Prozessor (7) Mittel umfasst, um den zeitlichen Abstand zwischen dem Zeitpunkt der Aussendung eines Schallimpulses (12) durch die Schallquelle (1) und dem Zeitpunkt seiner Erfassung durch den Empfänger (3) zu berechnen, sowie Mittel, um durch Multiplikation des berechneten zeitlichen Abstandes mit der Schallgeschwindigkeit im Wasser den Abstand zwischen dem Empfänger (3) und der Schallquelle (1) zu berechnen.

4. Gerät nach einem der vorangehenden Ansprüche, **dadurch gekennzeichnet, dass** der Prozessor (7) der Anordnung (3) für den Empfang und die Signalaussendung Mittel zur Unterscheidung umfasst, die es ihm gestatten, die von einer bestimmten Schallquelle (1) ausgesendeten Impulse zu erkennen.

5. Gerät nach einem der vorangegangenen Ansprüche, **dadurch gekennzeichnet, dass** die Schallquelle (1) Mittel (17) aufweist, um eine Sendefrequenz auszuwählen.

6. Gerät nach einem der vorangegangenen Ansprüche, **dadurch gekennzeichnet, dass** die Schallquelle (1) Mittel umfasst, um ein spezifisches Signal auszusenden, das dafür geeignet ist, vom Prozessor (7) als solches erkannt zu werden, so dass die Mittel (8) für die Signalaussendung eine für das spezifische Signal charakteristische, sichtbare und/oder hörbare Anzeige liefern.

7. Gerät nach einem der vorangegangenen Ansprüche, **dadurch gekennzeichnet, dass** die Anordnung (3) für den Empfang und die Signalaussendung die Funktionen eines Tauchcomputers umfasst.
